Europäisches Patentamt

European Patent Office

Office européen des brevets

(19)

(11) **EP 0 680 572 B1**

(12) **EUROPÄISCHE PATENTSCHRIFT**

(45) Veröffentlichungstag und Bekanntmachung des Hinweises auf die Patenterteilung:
**04.02.1998 Patentblatt 1998/06**

(21) Anmeldenummer: **95900637.0**

(22) Anmeldetag: **18.11.1994**

(51) Int Cl.⁶: **F16H 61/38**, F16H 61/12

(86) Internationale Anmeldenummer:
**PCT/DE94/01357**

(87) Internationale Veröffentlichungsnummer:
**WO 95/14872 (01.06.1995 Gazette 1995/23)**

(54) **ELEKTROHYDRAULISCHE REGELGETRIEBESTEUERUNG MIT SICHERHEITSVORRICHTUNG**

ELECTRO-HYDRAULIC VARIABLE DRIVE CONTROL INCLUDING A SAFETY DEVICE

COMMANDE ELECTRO-HYDRAULIQUE D'UNE TRANSMISSION A VITESSE VARIABLE AVEC DISPOSITIF DE SECURITE

(84) Benannte Vertragsstaaten:
**BE DE FR GB IT NL SE**

(30) Priorität: **27.11.1993 DE 4340431**

(43) Veröffentlichungstag der Anmeldung:
**08.11.1995 Patentblatt 1995/45**

(73) Patentinhaber: **ROBERT BOSCH GMBH**
**70442 Stuttgart (DE)**

(72) Erfinder: **BAEUERLE, Peter**
**D-71636 Ludwigsburg (DE)**

(56) Entgegenhaltungen:
**EP-A- 0 134 721          EP-A- 0 324 928**
**EP-A- 0 487 128          GB-A- 2 260 379**

**Beschreibung**

Stand der Technik

Die Erfindung geht aus von einer elektrohydraulischen Regelgetriebesteuerung für ein elektronisch gesteuertes, kontinuierlich variables Getriebe nach der Gattung des Hauptanspruches. Eine derartige Regelgetriebesteuerung entsprechend den im Oberbegriff von Anspruch 1 aufgeführten Merkmalen ist beispielsweise aus der EP 324 928 A2 bekannt. Bei dieser bekannten Regelgetriebesteuerung wird bei Ausfall des elektrischen Ansteuersignals das Getriebe für den Fahrbetrieb in die größte Übersetzung geschaltet, so daß selbst bei Höchstgeschwindigkeit kein Überdrehen des Motors möglich ist. Zum Anfahren wird bei Fahrzeugstillstand auf die kleinste Übersetzung des Getriebes verstellt. Darüberhinaus ist es bekannt, bei derartigen Regelgetriebesteuerungen eine Sicherheitsschaltung vorzusehen, durch die bei Ausfall des elektrischen Ansteuersignals die augenblickliche Getriebeübersetzung konstant gehalten wird. Es ist weiterhin bekannt, für eine rein hydraulische Übersetzungsregelung einen motordrehzahlabhängigen Pitotdruck am Primärscheibenpaar des Getriebes abzugreifen. Dieser Pitotdruck wird als Regelgröße bei Ausfall des elektrischen Ansteuersignals verwendet. Diese bekannten Regelgetriebesteuerungen bzw. deren Sicherheitseinrichtungen für den Ausfall des elektrischen Ansteuersignals erfordern zum Teil recht aufwendige zusätzliche Mittel und/oder gewährleisten ein für den Fahrbetrieb nur unzureichendes Übersetzungsverhältnis des Getriebes.

Vorteile der Erfindung

Die erfindungsgemäße elektrohydraulische Regelgetriebesteuerung mit den kennzeichnenden Merkmalen des Hauptanspruches hat demgegenüber den Vorteil, daß bei Ausfall des elektrischen Ansteuersignals weiterhin eine Übersetzungsregelung für das Getriebe sichergestellt ist, die eine im wesentlichen konstante Motordrehzahl über den gesamten Übersetzungsverstellbereich erlaubt. Diese Motordrehzahl ist unabhängig von den jeweiligen Lastzuständen. Die für die Übersetzungsregelung erforderliche Regelgröße kann auf vorteilhafte Weise direkt am hydraulischen Steuergerät entnommen werden, d.h. es sind keine kostspieligen und aufwendigen Druckmeßeinrichtungen am Getriebe erforderlich. Die erfindungsgemäße elektrohydraulische Regelgetriebesteuerung kann auf einfache und vorteilhafte Weise so ausgelegt werden, daß selbst bei Höchstgeschwindigkeit ein Überdrehen des Motors ausgeschlossen ist. Während des Fahrbetriebes wird die Motordrehzahl auf ein mittleres Motordrehzahlniveau eingeregelt. Beim Abbremsen des Fahrzeuges wird diese Motordrehzahl so lange konstant gehalten, bis sich die kleinste Getriebeübersetzung eingestellt hat. Damit ist dann ein Anfahren des Fahrzeuges jederzeit möglich. Weitere Vorteile und vorteilhafte Weiterbildungen der Erfindung ergeben sich aus den Unteransprüchen und der Beschreibung.

Zeichnung

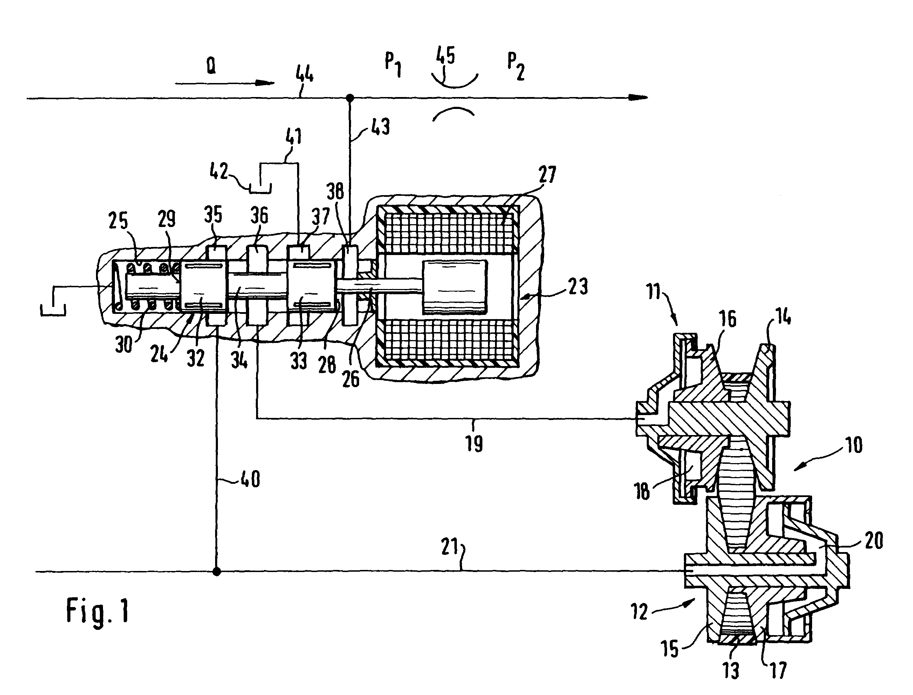

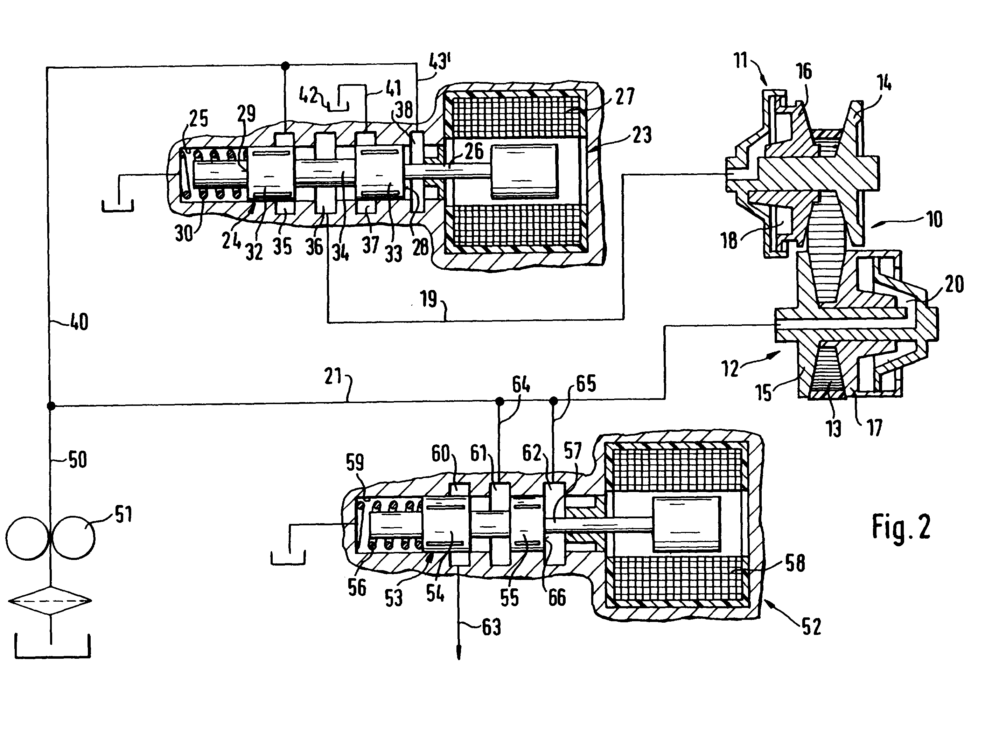

Zwei Ausführungsbeispiele der Erfindung sind in der nachfolgenden Beschreibung und Zeichnung näher erläutert. Letztere zeigt in Figur 1 den schematischen Aufbau einer erfindungsgemäßen elektrohydraulischen Getriebesteuerung. Figur 2 zeigt ein zweites Ausführungsbeispiel der Regelgetriebesteuerung.

Beschreibung der Ausführungsbeispiele

In Figur 1 ist mit 10 ein an sich bekanntes kontinuierlich variables Getriebe (Umschlingungsgetriebe, continuously variable transmission, CVT) dargestellt, zwischen dessen Primärscheibenpaar 11 und Sekundärscheibenpaar 12 ein Übertragungsmittel 13 eingespannt ist. Dieses kann beispielsweise ein Riemen, ein Schubgliederband oder eine Kette sein. Das Primärscheibenpaar 11 und das Sekundärscheibenpaar 12 haben jedes jeweils eine Festscheibe 14 bzw. 15 und eine axial verschiebbare Losscheibe 16 bzw. 17. An der Losscheibe 16 des Primärscheibenpaars 11 ist ein Primärdruckraum 18 angeordnet, der über eine Primärdruckleitung 19 beaufschlagt ist. An der Losscheibe 17 des Sekundärscheibenpaars 12 ist ebenfalls ein Sekundärdruckraum 20 angeordnet, der über eine Sekundärdruckleitung 21 beaufschlagt ist. Das Primär- und Sekundärscheibenpaar 11 bzw. 12 arbeiten im hier dargestellten Ausführungsbeispiel nach dem Master-Slave-Prinzip zusammen, d.h. das Sekundärscheibenpaar 12 bzw. dessen Losscheibe 17 wird über die Sekundärdruckleitung 21 mit dem Scheibenanpreßdruck beaufschlagt, während der Druck im Primärdruckraum 18 an der Losscheibe 16 des Primärscheibenpaars 11 über ein Übersetzungsregelventil 23 veränderbar ist. Über eine Veränderung des Ölvolumens im Primärdruckraum 18 läßt sich auf an sich bekannte Weise die Getriebeübersetzung variieren. Dabei kann das Verhältnis der wirksamen Druckflächen der beiden Losscheiben 16 bzw. 17 des Primärscheibenpaars 11 bzw. Sekundärscheibenpaars 12 beispielsweise 2:1 betragen.

Das Übersetzungsregelventil 23 ist als Schieberventil ausgebildet, dessen Schieber 24 in einer Schieberbohrung 25 dicht gleitend geführt ist und vom - gestrichelt dargestellten - Stößel 26 eines Elektromagneten 27 verschiebbar ist. Dieser Stößel 26 wirkt auf die (rechte) Stirnseite 28 des Schiebers 24. Auf die gegenüberliegende (linke) Stirnseite 29 wirkt eine Druckfeder 30. Der Schieber 24 hat zwei dicht in der Schieberbohrung 25 geführte Schieberabschnitte, einen linken Schieberabschnitt 32 und einen rechten Schieberabschnitt 33, die über einen Abschnitt 34 geringeren Durchmessers miteinander verbunden sind. Die beiden Schieberabschnitte 32 und 33 wirken mit vier am Umfang der Schieberbohrung angeordneten Steuerringnuten 35 bis 38 zusammen. Die in der Zeichnung von links ausgehend erste Steuerringnut 35 ist über eine Druckleitung 40 mit der Sekundärdruckleitung 21 verbunden. Die zweite Steuerringnut 36 ist mit der Primärdruckleitung 19 verbunden. Die dritte Steuerringnut 37 ist über eine Rücklaufleitung 41 mit einem Behälter 42 verbunden. Die vierte Steuerringnut 38 ist über eine Regeldruckleitung 43 mit einer weiteren Druckleitung 44 verbunden. In dieser Druckleitung 44 ist eine Drossel 45 angeordnet, und zwar stromabwärts, d.h. hier in der Darstellung rechts, von der Verbindungsstelle zwischen Druckleitung 44 und Regeldruckleitung 43. Die Druckleitung 44 stellt eine ölführende Verbindungsleitung dar, über welche ein Volumenstrom proportional zur Pumpenfördermenge und somit zur Motordrehzahl fließt. Die Druckleitung 44 kann beispielsweise die Ablaufleitung eines nicht dargestellten Sekundärdruckventils sein, welche die überschüssige Pumpenfördermenge an die nicht dargestellten Kupplungen oder an die Getriebeschmierung weiterleitet.

In der hier gezeigten Darstellung des Übersetzungsregelventils 23 sind die Kräfte auf den Schieber 24 durch die Druckfeder 30 einerseits und dem Regeldruck auf die Stirnseite 28 und den Stößel 26 andererseits im Gleichgewicht. In dieser Schaltstellung verschließt der linke Schieberabschnitt 32 die erste Steuerringnut 35, während der zweite Steuerschieber 33 die dritte Steuerringnut 37 abschließt. Durch entsprechendes Bestromen des Elektromagneten 27 läßt sich der Schieber 24 durch den Stößel 26 bewegen. Bei einer Bewegung des Schiebers nach links werden die ersten beiden Steuerringnuten 35 und 36 miteinander verbunden, während die dritte Steuerringnut 37 verschlossen bleibt. Dadurch werden die Druckleitung 40 und die Primärdruckleitung 19 miteinander verbunden, so daß der Druck im Primärdruckraum 18 ansteigt. Aufgrund der zuvor angeführten Flächendifferenz der wirksamen Druckflächen an den beiden Losscheiben vergrößert sich das Übersetzungsverhältnis des Getriebes.

Wird durch entsprechende Bestromung des Elektromagneten 27 der Schieber 24 dagegen nach rechts bewegt, wird die erste Steuerringnut 35 und damit die Druckleitung 40 einseitig verschlossen, während gleichzeitig die Primärdruckleitung 19 über die zweite Steuerringnut 36 und die dritte Steuerringnut 37 mit der Rücklaufleitung 41 verbunden wird. Dadurch sinkt der Druck im Primärdruckraum 18, so daß sich die Getriebeübersetzung des Getriebes 10 verringert.

Bei Ausfall des Elektromagneten 27 bzw. seiner elektrischen Ansteuerung wird der Schieber 24 aufgrund der Wirkung der Druckfeder 30 nach rechts bewegt. Dieser Bewegung ist bei Ausfall des Elektromagneten 23 nur noch die Kraft aufgrund des Regeldruckkes der Regeldruckleitung 43 auf die rechte Stirnseite 28 des Schiebers 24 entgegengerichtet.

Für den Volumenstrom in der Druckleitung 44 gilt

$$Q = \alpha * A * \sqrt{2(p_1 - p_2)/\rho} \ \sqrt{} \qquad (1)$$

wobei Q der Ölvolumenstrom, $\alpha$ der Durchflußkoeffizient, A die Drosselquerschnittsfläche, $\rho$ die Dichte des Druckmittels und $p_1$ und $p_2$ die Drücke vor bzw. hinter der Drossel 45 sind. Damit ergibt sich für den Druck $p_1$ vor der Drossel 45 die Gleichung

$$p_1 = (\rho * Q^2)/(2\alpha^2 * A^2) + p_2. \qquad (2)$$

Unter der Voraussetzung, daß der Ölvolumenstrom Q proportional zur Pumpenfördermenge und somit zur Motordrehzahl des Kraftfahrzeuges ist, und daß der Druck $p_2$ hinter der Drossel 45 zumindestens näherungsweise konstant ist, ergibt sich, daß der Druck $p_1$ vor der Drossel 45 proportional zum Quadrat $Q^2$ des Ölvolumenstroms ist. Damit stellt der Druck $p_1$ vor der Drossel 45, der über die Regeldruckleitung 43 und die vierte Steuerringnut 38 auf die Stirnseite 28 des Schiebers 24 wirkt, eine motordrehzahlabhängige Regelgröße dar.

Steigt daher bei Ausfall des Elektromagneten 27 infolge einer zu hohen Motordrehzahl der Druck $p_1$ an, bewegt sich der Schieber 24 gegen die Wirkung der Feder 34 nach links, so daß die erste und zweite Steuerringnut 35 bzw. 36 miteinander verbunden werden. Dadurch werden die Druckleitung 40 und die Primärdruckleitung 19 miteinander verbunden, so daß, wie zuvor beschrieben, die Getriebeübersetzung ansteigt. Das führt zu einer niedrigeren Primärdrehzahl und somit zu einer geringeren Motordrehzahl. Unterschreitet dagegen der Druck $p_1$ vor der Drossel 45 einen vorgegebenen Solldruck, so wird der Schieber 24 aufgrund der Wirkung der Feder 30 nach rechts verschoben, so daß die zweite und die dritten Steuerringnut 36 bzw. 37 miteinander verbunden werden. Damit wird der Primärdruckraum 18 zum Behälter 42 entlastet, so daß - wie zuvor beschrieben - die Getriebeübersetzung sich verringert.

Durch diese Regeldruckansteuerung des Übersetzungsregelventils 23 wird eine motordrehzahlabhängige Fail-Safe-Regelung geschaffen, die bei Ausfall der elektrischen Ansteuerung des übersetzungsregelventils eine wirksame, energetisch günstige und motorschonende Übersetzungsregelung des Getriebes ermöglicht.

Bei der Regelgetriebesteuerung nach Figur 2 wird zur Fail-Safe-Regelung des Übersetzungsverhältnisses der Druckabfall an einer variablen Drosselstelle genutzt. Diese variable Drosselstelle kann beispielsweise ein Druckbegrenzungsventil oder ein Stromregelventil sein und ist im hier dargestellten Ausführungsbeispiel ein Systemdruckregelventil. Analog zum zuvor beschriebenen Ausführungsbeispiel wird auch hier das Sekundärscheibenpaar 12 über die Sekundärdruckleitung 21 beaufschlagt, wobei die Sekundärdruckleitung 21 über eine Förderleitung 50 mit einer Pumpe 51 verbunden ist. Von dieser Pumpe 51 wird ebenfalls die Druckleitung 40 mit Druckmittel gespeist. Diese führt wie beim Ausführungsbeispiel zuvor zum Übersetzungsregelventil 23. Dieses ist so aufgebaut, wie das zuvor beschriebene. Die Druckleitung 40 ist mit der ersten Steuerringnut 35 verbunden. Die zweite Steuerringnut 36 ist mit der Primärdruckleitung 19 verbunden und die dritte Steuerringnut 37 mit der Rücklaufleitung 41. Die vierte Steuerringnut 38 ist mit einer Regeldruckleitung 43' verbunden, die wiederum von der Druckleitung 40 abzweigt.

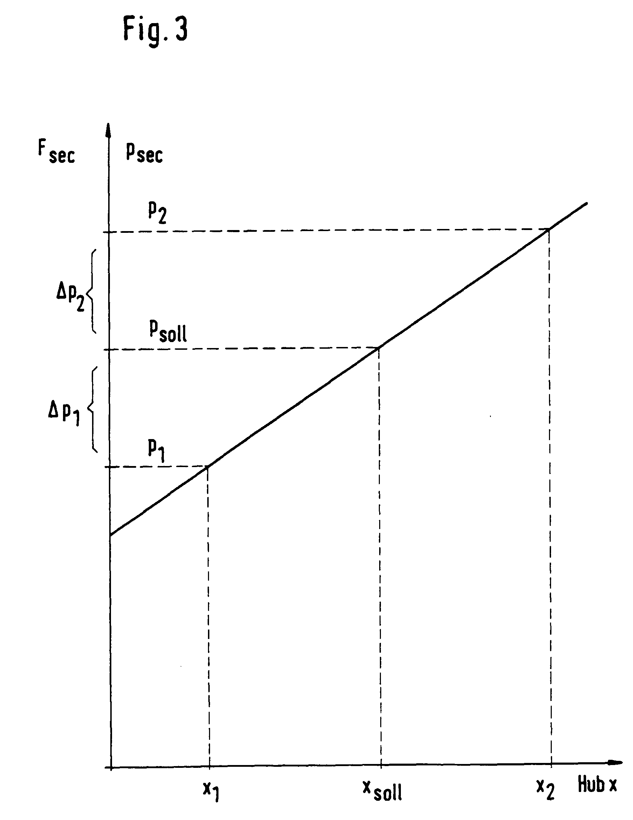

Parallel zur Sekundärdruckleitung 21 ist ein Systemdruckregelventil 52 geschaltet. Dieses ist als elektromagnetisch betätigtes Schieberventil ausgebildet, dessen Schieber 53 mit zwei Schieberabschnitten 54 und 55 einerseits von einer Druckfeder 56 und andererseits vom Stößel 57 des Elektromagneten beaufschlagt wird. Der Schieber 53 ist in einer Schieberbohrung 59 mit drei Ringnuten 60 bis 62 dicht gleitend geführt. Die erste Ringnut 60 ist mit einer Ablaufleitung 63 verbunden, welche die überschüssige Pumpenfördermenge an die - nicht dargestellten - Kupplungen und an die Getriebeschmierung weiterleitet. Die zweite Ringnut 61 ist über eine erste Steuerleitung 64 mit der Sekundärdruckleitung 21 verbunden. Die dritte Steuerringnut 62 ist über eine zweite Steuerleitung 65 ebenfalls mit der Sekundärdruckleitung 21 verbunden, und zwar stromabwärts von der Verbindung zur ersten Steuerleitung 64. In der hier dargestellten Steuerstellung des Schiebers 53 ist die erste Ringnut 60 durch den Schieberabschnitt 54 verschlossen, während der zweite Schieberabschnitt 55 die zweite und dritte Ringnut 61 bzw. 62 trennt. Damit sind alle drei Ringnuten 60 bis 62 einseitig verschlossen. Durch Bestromen des Elektromagneten 58 kann der Schieber 53 gegen die Wirkung der Feder 56 nach links verschoben werden, so daß die zweite Ringnut 61 mit der ersten Ringnut 60 verbunden wird, und so die erste Steuerleitung 64 mit der Ablaufleitung 63 verbunden wird. Dadurch sinkt der Druck in der Sekundärdruckleitung 21 bzw. im Sekundärdruckraum des Sekundärdruckscheibenpaares 12. Bei Ausfall des Elektromagneten 58 bzw. der elektrischen Ansteuerung wirken auf den Schieber 53 die Kraft aufgrund der Wirkung der Druckfeder 56 und die an seiner rechten Stirnseite 66 einwirkende Kraft aufgrund des Druckes in der zweiten Steuerleitung 65 bzw. der dritten Ringnut 62. Dabei stellt sich an der ersten Ringnut 60 ein Auslaßquerschnitt ein, über den der über das für die Getriebeverstellung erforderliche Maß hinausgehende Pumpenvolumenstrom zu den weiteren Verbrauchern (Kupplung bzw. Getriebeschmierung) abfließt. In Figur 3 ist für eine entsprechende Federkennlinie der Druckfeder 56 der sich dabei einstellende Sekundärdruck $p_{sec}$ an der Stirnfläche 66 über den Öffnungshub x an der ersten Ringnut 60 aufgetragen. Eine zunehmende Pumpenfördermenge hat zur Folge, daß sich der Ventilhub bzw. der Weg des Schiebers 53 von $x_{Soll}$ auf $x_2$ vergrößern muß. Entsprechend steigt die Vorspannung der Druckfeder 56, bzw. der Druck an der Stirnfläche 66 des Schiebers 53 um $\Delta p_2$. Umgekehrt verringert sich bei kleiner Pumpenfördermenge und somit geringerer Motordrehzahl der Ventilhub bzw. Auslaßquerschnitt an der ersten Ringnut 60, so daß der Sekundärdruck absinkt. Der Öffnungshub x und der sich dabei einstellende Sekundärdruck absinkt. Der Öffnungshub x und der sich dabei einstellende Sekundärdruck $p_{sec}$ stellen eine pumpenfördermengenabhängige und somit auch motordrehzahlabhängige Größe dar, welche sich für die Ansteuerung des Übersetzungsregelventils 23 eignet. Diese Regelgröße wirkt über die Sekundärdruckleitung 21, die Druckleitung 40 bzw. die Regeldruckleitung 43' wie beim zuvor angeführten Ausführungsbeispiel auf die vierte Steuerringnut 38 bzw. die Stirnseite 28 des Schiebers 24.

Im Gegensatz zu den hier dargestellten Ausführungsbeispielen, bei denen der Regeldruck für die Übersetzungsverstellung ständig auf die eine Stirnseite des Schiebers 24 einwirkt, ist es auch möglich, die Regeldruckleitung 43 bzw. 43' mit einem Sperrventil zu versehen. Mit diesem Sperrventil wird das Einwirken des Regeldruckes auf die Stirnseite des Schiebers 24 im Nennbetrieb verhindert. Erst bei Ausfall des elektrischen Ansteuersignals bzw. des Elektromagneten wird das Sperrventil in Durchfluß geschaltet. Die Ansteuerung des Sperrventils kann beispielsweise über einen Druckschalter in Abhängigkeit vom Pumpendruck erfolgen. Es ist auch möglich, das Sperrventil zu schalten, wenn die Magnetkraft des Elektromagneten 23 eine untere Schwelle unterschreitet.

Es ist weiterhin möglich, den Regeldruck vor einer beliebigen Verengung abzugreifen, beispielsweise an einer Kombination von fester und variabler Durchflußbegrenzung (z.B. Blende, Drossel, Ventil).

Es ist weiterhin möglich, daß das Übersetzungsregelventil über eine Sekundärdruckleitung auf das Sekundärscheibenpaar einwirkt.

**Patentansprüche**

1. Elektrohydraulische Regelgetriebesteuerung eines elektronisch gesteuerten, kontinuierlich variablen KegelscheibenumschlingungsGetriebes (10) eines Kraftfahrzeuges mit einem von einer Pumpe (51) mit Druckmittel versorgten Übersetzungsregelventil (23), dessen Ventilglied (24) von einem Elektromagneten (27) verschiebbar ist und welches über eine Druckleitung (19) ein zugeordnetes Scheibenpaar (11) des Getriebes (10) zur Übersetzungsänderung beaufschlagt, und mit einer Sicherheitsvorrichtung, die bei Ausfall des Elektromagneten (27) eine Getriebesteuerung ermöglicht, **dadurch gekennzeichnet**, daß das Ventilglied (24) wenigstens bei Ausfall des Elektromagneten (27) über eine Regeldruckleitung (43; 43') mit einem Regeldruck zur Übersetzungsregelung beaufschlagbar ist, der wiederum von der Fördermenge der Pumpe (51) abhängig ist.

2. Regelgetriebesteuerung nach Anspruch 1, dadurch gekennzeichnet, daß auf das Ventilglied (24) ein Federelement (30) einwirkt, dessen Kraftwirkung der des Regeldruckes entgegengerichtet ist.

3. Regelgetriebesteuerung nach Anspruch 1 oder 2, dadurch gekennzeichnet, daß bei steigendem Regeldruck das zugeordnete Scheibenpaar (11) des Getriebes über das Übersetzungsregelventil (23) derart beaufschlagt wird, daß das Übersetzungsverhältnis des Getriebes (10) verkleinert wird.

4. Regelgetriebesteuerung nach einem der Ansprüche 1 bis 3, dadurch gekennzeichnet, daß die Regeldruckleitung (43, 43') mit einer Druckmittelleitung (44; 40, 21) verbunden ist, in der stromabwärts von der Verbindungsstelle eine Verengung (45; 52) angeordnet ist.

5. Regelgetriebesteuerung nach Anspruch 4, dadurch gekennzeichnet, daß die Verengung eine konstante Drosselstelle ist.

6. Regelgetriebesteuerung nach Anspruch 4, dadurch gekennzeichnet, daß die Verengung (52) einen variablen Querschnitt hat.

7. Regelgetriebesteuerung nach Anspruch 6, dadurch gekennzeichnet, daß die Verengung (52) ein Druckbegrenzungsventil ist.

8. Regelgetriebesteuerung nach Anspruch 6, dadurch gekennzeichnet, daß die Verengung (52) ein Stromregelventil ist.

9. Regelgetriebesteuerung nach einem der Ansprüche 1 bis 8, dadurch gekennzeichnet, daß der Regeldruck ständig am Ventilglied (24) des Übersetzungsregelventils (23) ansteht.

10. Regelgetriebesteuerung nach einem der Ansprüche 1 bis 8, dadurch gekennzeichnet, daß in der Regeldruckleitung (43, 43') ein Sperrventil angeordnet ist, das bei Ausfall der elektromagnetischen Ansteuerung des Übersetzungsregelventils in seine Durchflußstellung geschaltet wird.

## Claims

1. Electrohydraulic variable-speed gearing control of an electronically controlled, continuously variable flexible-drive bevel gearing (10) of a motor vehicle with a transmission-ratio control valve (23) which is supplied with pressure medium from a pump (51) and whose valve element (24) can be displaced by an electromagnet (27) and which acts via a pressure line (19) on an assigned pair (11) of discs of the gearing (10) in order to change the transmission ratio, and with a safety device which enables gearing control in the case of failure of the electromagnet (27), characterized in that, at least in the case of failure of the electromagnet (27), the valve element (24) can have a control pressure for transmission-ratio control applied to it via a control pressure line (43; 43'), which control pressure is in turn dependent on the delivery rate of the pump (51).

2. Variable-speed gearing control according to Claim 1, characterized in that a spring element (30) whose force effect is opposed to that of the control pressure acts on the valve element (24).

3. Variable-speed gearing control according to Claim 1 or 2, characterized in that when the control pressure rises the assigned pair (11) of discs of the gearing is acted on via the transmission-ratio control valve (23) in such a way that the transmission ratio of the gearing (10) is reduced.

4. Variable-speed gearing control according to one of Claims 1 to 3, characterized in that the control pressure line (43, 43') is connected to a pressure medium line (44; 40, 21) in which a constriction (45; 52) is arranged downstream of the connection point.

5. Variable-speed gearing control according to Claim 4, characterized in that the constriction is a constant throttle point.

6. Variable-speed gearing control according to Claim 4, characterized in that the constriction (52) has a variable cross section.

7. Variable-speed gearing control according to Claim 6, characterized in that the constriction (52) is a pressure-limiting valve.

8. Variable-speed gearing control according to Claim 6, characterized in that the constriction (52) is a flow control valve.

9. Variable-speed gearing control according to one of Claims 1 to 8, characterized in that the control pressure is continuously present at the valve element (24) of the transmission-ratio control valve (23).

10. Variable-speed gearing control according to one of Claims 1 to 8, characterized in that a shut off valve is arranged in the control pressure line (43, 43'), which shut off valve is switched into its throughflow position if the transmission-ratio control valve fails to be driven electromagnetically.

## Revendications

1. Commande électro-hydraulique de régulation de transmission pour une transmission (10) à poulies coniques, variable en continu, à commande électrique d'un véhicule automobile ,comprenant une vanne de régulation de rapport de transmission (23) alimentée en sous fluide sous pression par une pompe (51), vanne dont l'organe de vanne (24) est coulissé par un électro-aimant (27) et qui agit par une conduite de pression (19) sur une paire de flasques de poulie (11) associées, de la transmission (10) pour modifier le rapport, ainsi qu'un dispositif de sécurité , qui en cas de défaillance de l'électro-aimant (27), permet une commande de la transmission ,
caractérisée en ce qu'
en cas de défaillance de l'électro-aimant( 27) l'organe de vanne (24) reçoit, pour la régulation du rapport de transmission, une pression de régulation par une conduite de pression de régulation (43, 43'), cette pression dépendant du débit de la pompe (51).

2. Commande de transmission réglable selon la revendication 1,
caractérisée en ce qu'
un élément à ressort (30) agit sur l'organe de vanne (24), dont la force s'oppose à celle engendrée par la pression de régulation.

3. Commande de transmission réglable selon les revendications 1 ou 2,
caractérisée en ce que
lorsque la pression de régulation augmente, la paire de flasques de poulie (11) associée, de la transmission est sollicitée par la vanne de régulation de rapport de transmission (23) pour diminuer le rapport de la transmission (10).

4. Commande de transmission réglable selon l'une des revendications 1 à 3,
caractérisée en ce que
la conduite de pression de régulation (43, 43') est reliée à une conduite de fluide sous pression (44; 40, 21) comportant un rétrécissement (45 ; 52) en aval du point d'embranchement.

5. Commande de transmission réglable selon la revendication 4,
caractérisée en ce que
le rétrécissement est un point d'étranglement constant.

6. Commande de transmission réglable selon la revendication 4,
caractérisée en ce que le rétrécissement (52) a une section variable.

7. Commande de transmission réglable selon la revendication 6,
caractérisée en ce que
le rétrécissement (52) est une soupape de limitation de pression.

8. Commande de transmission réglable selon la revendication 6,
caractérisée en ce que
le rétrécissement (52) est une vanne de régulation de débit.

9. Commande de transmission réglable selon l'une des revendications 1 à 8,
caractérisée en ce que
la pression de régulation est appliquée en permanence à l'organe de vanne (24) de la vanne de régulation de rapport de transmission (23).

10. Commande de transmission réglable selon l'une des revendications 1 à 8,
caractérisée par
une vanne d'arrêt montée dans la conduite de pression de régulation (43, 43'), qui est commutée en position passante en cas de défaillance de la commande électromagnétique de la vanne de régulation de rapport de transmission.

Fig. 1

Fig. 2

## Fig. 3